# EUROPEAN PATENT SPECIFICATION

(11) **EP 0 572 136 B1**
(45) Date of publication and mention of the grant of the patent: **22.07.1998**
(21) Application number: 93303628.7
(22) Date of filing: 11.05.1993
(51) Int. Cl.: H04N 5/93

(54) **Digital video signal recording and reproducing apparatus**
Vorrichtung zum Aufzeichnen/Wiedergeben eines Videosignals
Dispositif d'enregistrement et de reproduction d'un signal vidéo

(30) Priority: 26.05.1992 JP 133258/92
(43) Date of publication of application: 01.12.1993
(73) Proprietor: MATSUSHITA ELECTRIC INDUSTRIAL CO., LTD., Kadoma-shi, Osaka-fu, 571 (JP)
(72) Inventor: Gotou, Makoto, Nishinomiya-shi, Hyogo-ken 663 (JP); Sakakibara, Yoshio, Neyagawa-shi, Osaka-fu 572 (JP); Nakamura, Akihiko, Osaka-shi, Osaka-fu 532 (JP); Ichikawa, Kei, Osaka-shi, Osaka-fu 532 (JP); Isaka, Haruo, Yawata-shi, Kyoto-fu 614 (JP)
(74) Representative: Crawford, Andrew Birkby

(56) References cited:
- EP-A- 0 469 842
- PATENT ABSTRACTS OF JAPAN vol. 014, no. 169 (P-1032)30 March 1990 & JP-A-02 024 874 (SONY CORPORATION) 26 January 1990
- IEEE 1991 INTERNATIONAL CONFERENCE ON CONSUMER ELECTRONICS June 1991 , ROSEMONT, ILL., US pages 190 - 191 XP000289000 YONEDA ET AL 'AN EXPERIMENTAL DIGITAL VCR WITH NEW DCT-BASED BIT-RATE REDUCTION SYSTEM'
- PATENT ABSTRACTS OF JAPAN vol. 011, no. 174 (E-513)4 June 1987 & JP-A-62 007 277 (MATSUSHITA ELECTRIC INDUSTRIAL CO. LTD) 14 January 1987
- PATENT ABSTRACTS OF JAPAN vol. 017, no. 149 (P-1509)24 March 1993 & JP-A-04 319 513 (TOSHIBA CORPORATION)

## Description

### BACKGROUND OF THE INVENTION

### 1. Field of the Invention

The present invention relates to a digital signal recording and reproducing apparatus capable of recording and reproducing digital information signal such as digital video signal compressed in information quantity and reduced in bandwidth.

### 2. Description of the Prior Art

The digital signal recording and reproducing apparatus such as digital video tape recorder (digital VTR) for recording and reproducing digitized video signals has been developed for professional use because it is less in deterioration of the recorded and reproduced video signals due to dubbing as compared with the analog signal recording and reproducing apparatus. The digitized video information is, however, great in the quantity of information, and an immense amount of tape is spent for recording the information. For consumer-use, therefore, it has been considered to record the digital video signal after compressing it in information quantity and bandwidth by predictive coding, DCT (discrete cosine transform) coding, and variable length coding. For example, the information in each frame of the video signal is compressed, divided and recorded on consecutive plural tracks of a video tape. This method is disclosed, for example, in "An Experimental Digital VCR with 40 mm Drum, Single Actuator and DCT-Based Bit-Rate Reduction" by S.M.C. Borgers et al., IEEE Transactions on Consumer Electronics,Vol. 34, No. 3, pp. 597-605, August, 1988.

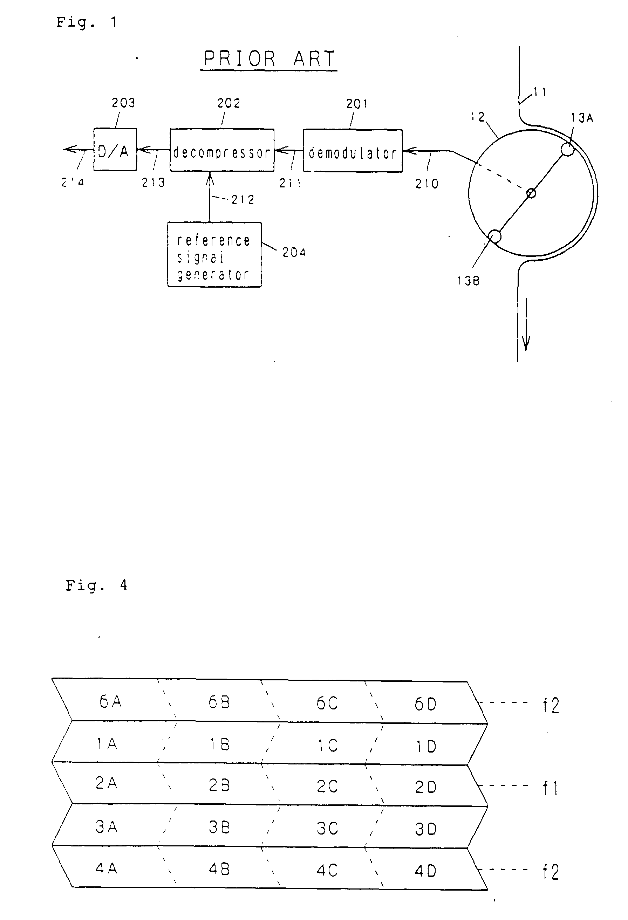

A reproducing system in the method is explained by referring to Fig. 1. A magnetic tape 11 having a specified tape width is wound on a rotary cylinder 12, and is controlled to run at a specified speed. Magnetic heads 13A, 13B mounted on the rotary cylinder reproduce a modulated video signal 210 recorded on the magnetic tape 11. A demodulator 201 demodulates the modulated video signal 210 to produce a compressed video signal 211. A decompressor 202 decompresses the compressed video signal 211 to produce a digital video signal 213. A frame reference signal 212 from a reference signal generator 204 is fed into the decompressor 202, and the insertion position of a time reference (for example, vertical synchronizing timing) of the frame of the digital video signal 213 is determined. A DA (digital-to-analog) converter 203 converts the digital video signal 213 into an analog video signal 214.

In such conventional digital signal recording and reproducing apparatus (digital VTR), when the mode is changed from the high speed playback mode to the normal playback mode, the tape reproducing position does not match with a position corresponding to the frame reference signal 212, and the reproduced image becomes discontinuous.

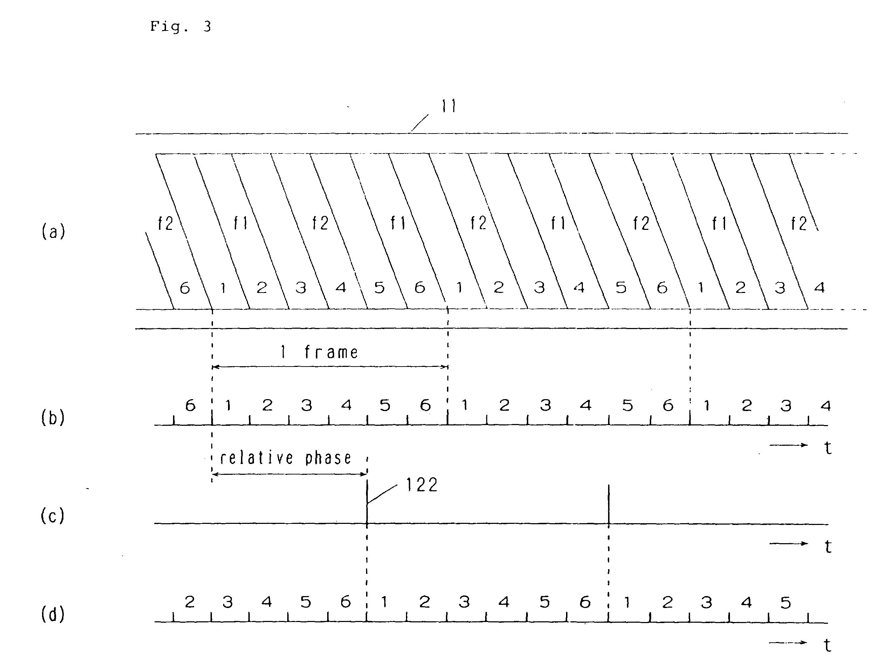

For example, as shown in Fig. 3 (a), in which the compressed video signal of one frame is divided and recorded on six tracks on the magnetic tape 11, when the mode is changed from the high speed playback mode to the normal playback mode and the tracks are sequentially reproduced in the correct time sequence as shown in Fig. 3 (b), the phase relation of the reproduced frame with the frame reference signal 122 shown in Fig. 3 (c) is not determined accurately. As a result, due to the difference between the frame reference signal 212 and the reproduced track position, the synchronizing signal showing the frame reference is erroneously inserted into the video signal becomes wrong, and a correct video signal will not be restored.

To solve such problem, it is proposed to shift the reproduction position of the magnetic tape by an amount corresponding to a specific number of tracks to match the reproduced track position with the frame reference signal, in EP-A-0 564 234, which is comprised in the state of the art in accordance with Art.54(3)EPC. This method is, however, accompanied by mechanical motion, and it takes a relatively long time until transfer action of the reproduced track position of the magnetic tape is finally stabilized.

### SUMMARY OF THE INVENTION

It is hence a primary object of the invention to present a digital signal recording and reproducing apparatus capable of correcting the insertion timing of the frame reference time promptly to an accurate position.

To achieve the above object, a digital signal recording and reproducing apparatus of the invention for recording and reproducing a video signal each group unit of which is digitized, compressed in information and divided into N tracks (where N is an integer of 4 or more), comprises a head for recording the video signal on a recording medium and reproducing the recorded signal, tracking control means for performing a tracking control of the head on a track when reproducing, reproduced position detecting means for detecting a reproduced track position in a group unit from a reproduced signal from the head and for producing a reproduced track position signal indicating the detected reproduced track position, relative phase detecting means for detecting a relative phase of the reproduced track position signal to a reference signal, delay time adjusting means for delaying the reproduced signal on the basis of the relative phase detected by the relative phase detecting means to obtain a delayed reproduced signal, and decompressing means for decompressing the delayed reproduced signal to obtain a reproduced video signal.

In this constitution, the digital signal recording and reproducing apparatus of the invention detects the relative phase of the reproduced track position signal to the reference signal by the relative phase detecting means, and delays the reproduced signal by the delay time adjusting means depending on the relative phase, so that the timing of the reference signal and the delayed reproduced signal can be matched instantly. As a result, when a digital VTR is composed of the digital signal recording and reproducing apparatus of the invention, the mode transfer time from the high speed playback to the normal playback is extremely shortened, and the response time to manipulation is shortened, so that the controllability can be notably enhanced.

### BRIEF DESCRIPTION OF THE DRAWINGS

Fig. 1 is a block diagram of a conventional digital signal reproducing apparatus.

Fig. 2 is a block diagram showing an embodiment of the invention.

Fig. 3 is a diagram for explaining the operation of the invention.

Fig. 4 is a track pattern diagram for explaining the operation of the invention.

### DESCRIPTION OF THE PREFERRED EMBODIMENT

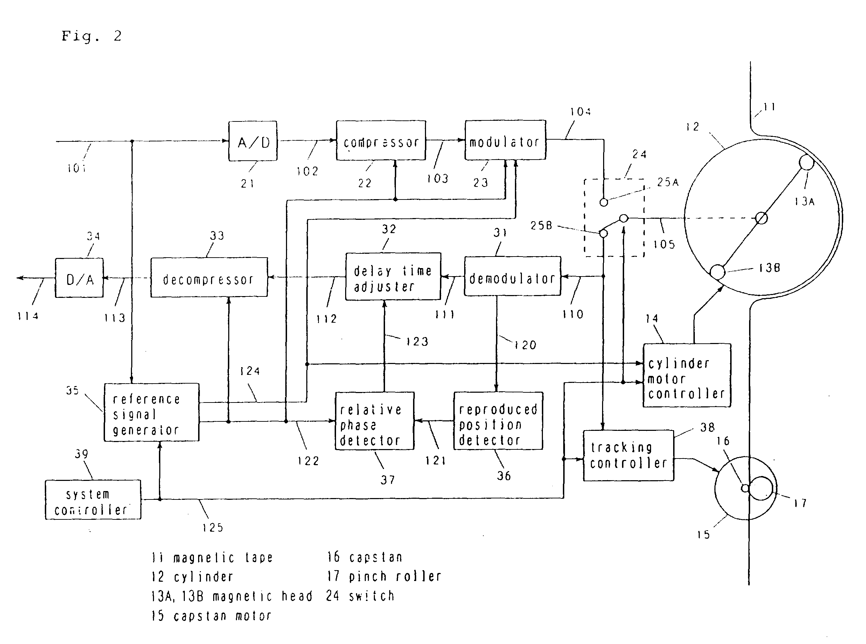

Referring now to the drawings, an embodiment of digital signal recording and reproducing apparatus of the invention is described in detail below. Fig. 2 is a block diagram of a digital VTR embodying the invention.

First the recording operation is described. A magnetic tape 11 is pinched between a capstan 16 driven by a capstan motor 15 and a pinch roller 17, and runs at a speed corresponding to the rotating speed of the capstan 16. When recording, the capstan 16 rotates at a specific constant speed, and the tape 11 runs at a specific constant speed. Magnetic heads 13A, 13B have different head gap azimuths from each other, and are mounted at positions apart by 180 degrees from each other on a rotary cylinder 12. The winding angle of the tape 11 on the cylinder 12 is substantially 180 degrees.

A reference signal generator 35 produces a frame reference signal 122 and a cylinder reference signal 124. The frame reference signal 122 is, in the recording mode, a binary signal synchronized with the frame of the input video signal 101, and expresses the operation timing standard of the recording system signal processing blocks (compressor 22, modulator 23) mentioned below. The cylinder reference signal 124 is a signal for showing the rotation reference phase of the cylinder 12, and has a triple frequency of the frame reference signal 122. The cylinder 12 is controlled by a cylinder motor controller 14 so as to rotate in synchronism with the cylinder reference signal 124. In the reproducing mode, a reference clock signal obtained from a built-in oscillator is frequency-divided to obtain the frame reference signal 122 and the cylinder reference signal 124.

The input video signal 101 is digitized into a digital signal of specific bit width (for example, 8 bits) by an AD (analog-to-digitial) converter 21.

The digital video signal 102 is fed into a compressor 22. The compressor 22 divides each frame (group unit) of the digital video signal 102 into a specific number of blocks each composed of a specific number of pixel data, shuffles the blocks within the frame, and performs discrete cosine transform (DCT) and variable length coding to thereby compress the quantity of information to about 1/5 to 1/10.

The compressed video signal 103 is fed into the modulator 23. The modulator 23 processes the compressed video signal 103 by a known channel coding suited to magnetic recording (for example, interleaved NRZI modulation, 8-to-14 modulation, 8-to-10 modulation). The modulator 23 finally divides the coded video signal 103 in every half period of the cylinder reference signal 124 corresponding to each track. As a result, the coded video signal of one frame is divided into six sections. In each section, moreover, the information showing the order in the frame (track position information) is added. Besides, by digital bit modulation or analog signal summation, pilot signals respectively having a first frequency f1 and a second frequency f2 are alternately mixed in every two sections. The signal thus processed is outputted as a modulated video signal 104.

When recording, the switch circuit of a changeover part 24 is connected to the 25A side, so that the modulated video signal 104 is sent to the magnetic heads 13A, 13B, and recorded on the magnetic tape 11 such that the six sections of each frame are respectively recorded on six consecutive tracks.

Fig. 3 (a) shows a track pattern recorded on the magnetic tape 11. Since the cylinder 12 is controlled so as to run three rotations in one frame period of the input video signal 101, the six sections of modulated video signal of one frame are recorded on six tracks, respectively. In each track, the track position information (track numbers 1 to 6) is recorded together with the modulated video signal to show the track position in the frame. In every two tracks interspaced with a track free from the pilot signal, the pilot signals of the first frequency f1 and second frequency f2 are recorded. The track without the pilot signal is recorded by the magnetic head 13A, and the track with a pilot component is recorded by the magnetic head 13B.

A more specific track pattern is shown in Fig. 4. The recording azimuth of each track differs from each adjacent track. The modulated video signal is divided into blocks in each track. The numerals in the diagram denote the track position information, and A, B, C, D represent block divisions in the track. In high speed playback, every time a divided block in the track is reproduced, demodulation and decompression are carried out to fill in a position of the picture to be occupied by the block, so that a combined high speed playback video picture can be formed.

The operation when the mode is changed from the high speed playback to the normal playback is explained below. In the normal playback, all of the modulated video signals recorded on the track are accurately reproduced, and image reproduction of high precision is effected. The cylinder motor controller 14 controls the cylinder 12 to rotate in synchronism with the cylinder reference signal 124 generated by the reference signal generator 35. The reference signal generator 35 generates, when reproducing, the frame reference signal 122 of a specific frequency and the cylinder reference signal 122 having a frequency three times as high as the specific frequency. The magnetic heads 13A, 13B reproduce the modulated video signals recorded on the magnetic tape 11, and produce the head reproduced signal 105. When reproducing, the switch circuit of the changeover part 24 is switched to the 25B side, and the head output is transmitted as a reproduced modulated signal 110.

The tracking controller 38 extracts the pilot signals contained in the reproduced modulated signal 110, and a level difference between the frequency f1 component and frequency f2 component is obtained as a tracking error signal for tracking control. To make this error signal 0, the rotation of the capstan motor 15 is controlled by the tracking controller 38. The tracking error signal is detected in every two tracks by detecting the magnitudes of the two pilot signal components mixing, as crosstalk, from the adjacent tracks into the reproduced modulated signal reproduced by the magnetic head 13A which scans the track without recorded pilot signal. Every time after reproducing two tracks, the polarity of the difference of the magnitudes of the pilot signals is inverted, and the magnitude of the pilot component of the preceding track and the magnitude of the pilot component of the succeeding track are always compared to control the rotating speed of the capstan motor 15. The interval (control period) of lock positions by tracking control corresponds to four tracks, equal to one cycle of a set of pilot signals recorded on the tape. By this operation, the magnetic heads 13A, 13B scan the azimuth matched tracks accurately.

The reproduced modulated signal 110 is demodulated by the demodulator 31 to obtain a compressed reproduced signal 111. The demodulator 31 produces a track information signal 120 containing reproduced track position information from the reproduced modulated signal 110. The reproduced position detector 36 detects the reproduced track position from the track information signal 120, and produces a track position signal 121 indicative of the reproduced track position.

A relative phase detector 37 stores the track position signal 121 from the reproduced position detector 36 in a built-in memory register at the generation timing of the frame reference signal 122 from the reference signal generator 35, and outputs the value of the signal stored in this register as a relative phase signal corresponding a phase of the reproduced track position relative to the phase of the frame reference signal 122. The relative phase signal 123 from the relative phase detector 37 is sent to a delay time adjuster 32.

The delay time adjuster 32 comprising, for example, a random access memory, stores the reproduced compressed signal 111 in the memory, and delays the stored signal properly to produce a delayed reproduced signal 112. The delay time of the delay time adjuster 32 is adjusted by the relative phase signal 123 of the relative phase detector 123. In the example in Fig. 3, the relative phase of the reproduced track position (b) to the frame reference signal (c) is detected to be a value corresponding to four tracks by the relative phase detector 32, and the delay time adjuster delays the compressed reproduced signal by a delay time corresponding to four tracks to produce a delayed reproduced signal. As a result, the frame phase indicated by the reproduced track position (d) of the delayed reproduced signal and the frame reference signal (c) are matched in phase.

The decompressor 33 receives and decompresses the delayed reproduced signal 112 to obtain a reproduced digital video signal 113. The decompressor 33 also receives the frame reference signal 122, and inserts a vertical synchronizing signal of each frame into the reproduced digital video signal 113 in synchronism with the timing of the frame reference signal 122 (a vertical synchronizing signal of each field is also generated and inserted). The reproduced digital video signal 113 is converted into an analog video signal 114 by the DA converter 35.

The high speed playback is explained next. Generally, in the digital VTR for recording and reproducing video signal, it is demanded that the frame frequency of the output video signal be always matched with the specific reference value. This is because the vertical synchronizing frequency of a television monitor is fixed at a specific value. Another advantage is that the circuit composition of input and output is simplified. In high speed playback, however, in order to demodulate the reproduced signal from the magnetic tape 11 accurately, the rotating speed of the cylinder 12 must be changed and corrected from the rotating speed in recording depending on the tape running speed such that the track direction component of the relative speed of each of the magnetic heads 13A, 13B to the tape 11 is kept the same as in recording. Accordingly, the rotation of the cylinder 12 in high speed playback is not synchronized with the frame reference signal 122 (and the cylinder reference signal 124 at its triple frequency), and the phase relation of the two is unstable. In high speed playback, since the magnetic head crosses the tracks, the reproduced signal is demodulated and decompressed on a block by block basis, and the video information of the each accurately reproduced block is fitted into a corresponding position of a whole picture screen to obtain a high speed playback picture.

In the parts required to operate differently in the recording, reproducing, and high speed playback modes (for example, reference signal generator 35, tracking controller 38, cylinder motor controller 14, and changeover part 24), a mode switching signal 125 is supplied thereto from a system controller 39.

The advantageous effects of the digital signal recording and reproducing apparatus of the invention are described below. When changed from the high speed playback mode to the normal playback mode, the cylinder 12 is controlled to rotate in synchronism with the cylinder reference signal 124 from the reference signal generator 35. By the pilot signals contained in the reproduced modulated signal 110 reproduced from the magnetic heads 13A, 13B, the tracking controller 38 controls the rotation of the capstan to control the running of the magnetic tape 11. As a result, the magnetic heads 13A, 13B are controlled in tracking so as to sequentially reproduce the tracks matched therewith in azimuth. The set of two pilot signals used for tracking are repeated at a period of four tracks, while the compressed video signal is recorded by dividing the group unit of one frame into six tracks (that is, the number of tracks N per group unit > control period). Therefore, in the stable pull-in state of tracking, the desired reproduced track position may not always match in timing with the frame reference signal 122. For example, as shown in Fig. 3, it may occur that synchronism proceeds with a relative phase difference of four tracks. In the digital VTR of the embodiment, if such relative phase difference occurs due to mode change, the relative position of the reproduced track relative to the frame reference signal 122 is detected by the relative position detector 37, and the delay time of the delay time adjuster 32 can be adjusted promptly and accurately depending on the detected relative phase. As a result, the transfer time from the high speed playback mode to the normal playback mode is markedly shortened, and the controllability as a digital signal recording and reproducing apparatus is significantly enhanced.

Besides, the tracking for controlling tape running does not require timing matching action with the reference frame signal 122. Hence, the tracking control is extremely simplified.

Furthermore, since the delay time adjuster 32 is designed to delay the compressed reproduced signal 111, the video information within the delay time is small in quantity, so that the memory quantity required in the delay time adjuster 32 can be notably decreased.

In the foregoing embodiment, the tracking control is effected by reproducing the multiplexed pilot signals recorded on the tracks, but the invention is not limited to such case alone. For example, tracking control may be effected by partially recording pilot signals in a specific position on the track, or by using the control signal recorded in a linear track.

The group unit of compression and division is not limited to one frame, but may be composed of plural frames.

In the above embodiment, the mode transfer from the high speed playback to the normal playback is described, but the invention is not limited to this case alone. The same excellent effects are obtained also in the mode transfer from the slow playback, still playback or freeze mode to the normal playback mode.

## Claims

1. A digital signal recording and reproducing apparatus for recording and reproducing a video signal (101) each group unit of which is digitized, compressed in information quantity and divided into N tracks, where N is an integer of 4 or more, of a recording medium (11), comprising:
a head (13A, 13B) for recording a compressed digital video signal on the recording medium (11) and reproducing the recorded signal;
tracking control means (38) for controlling tracking of the head on a track when reproducing;
reproduced position detecting means (36) for detecting a reproduced track position within a group unit from a reproduced signal (120) from the head, and for producing a reproduced track position signal (121) indicating the reproduced track position that has been detected;
relative phase detecting means (37) for detecting a relative phase of the reproduced track position signal to a reference signal;
delay time adjusting means (32) for delaying the reproduced signal on the basis of the relative phase detected by the relative phase detecting means to obtain a delayed reproduced signal; and
decompressing means (33) for decompressing the delayed reproduced signal from the delay time adjusting means to obtain a reproduced video signal (113, 114).

2. An apparatus according to Claim 1, wherein a pilot signal is recorded on the tracks, and the tracking control means (38) performs tracking control using the pilot signal.

3. An apparatus according to Claim 2, wherein the pilot signal comprises signals of a first frequency and a second frequency alternately recorded on every two tracks.

4. An apparatus according to Claim 2, wherein the tracking control means performs tracking control by controlling a rotating speed of a capstan (16) on the basis of a tracking error signal obtained from the pilot signal recorded on the tracks.

5. An apparatus according to Claim 1 or 2, wherein a control period of the tracking control means (38) is smaller than N tracks.

## Patentansprüche

1. Digital-Signal-Aufzeichnungs- und Wiedergabegerät zum Aufzeichnen und Wiedergeben eines Video-Signals (101), wobei jede Gruppeneinheit davon digitalisiert wird, in der Informationsmenge komprimiert wird und in N-Spuren, wobei N ein ganzzahliges von 4 oder mehr ist, eines Aufzeichnungsmediums (11) unterteilt wird, das aufweist:
einen Kopf (13A, 13B) zum Aufzeichnen eines komprimierten, digitalen Video-Signals auf dem Aufzeichnungsmedium (11) und zum Wiedergeben des aufgezeichneten Signals;
eine Spurungssteuereinrichtung (38) zum Steuern einer Spurung des Kopfs auf einer Spur, wenn wiedergegeben wird;
eine Erfassungseinrichtung (36) für die wiedergegebene Position zum Erfassen einer wiedergegebenen Spurposition innerhalb einer Gruppeneinheit von einem wiedergegebenen Signal (120) von dem Kopf und zum Erzeugen eines wiedergegebenen Spurpositionssignals (121), das die wiedergegebene Spurposition, die erfaßt worden ist, anzeigt;
eine Erfassungseinrichtung (37) für die relative Phase zum Erfassen einer relativen Phase des wiedergebenen Spurpositionssignals zu einem Referenzsignal;
eine Verzögerungszeit-Einstelleinrichtung (32) zum Verzögern des wiedergegebenen Signals auf der Basis der relativen Phase, die durch die Erfassungseinrichtung für die relative Phase erfaßt ist, um ein verzögertes, wiedergegebenes Signal zu erhalten; und
eine Dekomprimiereinrichtung (33) zum Dekomprimieren des verzögerten, wiedergegebenen Signals von der Verzögerungszeit-Einstelleinrichtung, um ein wiedergegebenes Video-Signal (113, 114) zu erhalten.

2. Gerät nach Anspruch 1, wobei ein Pilotsignal auf den Spuren aufgezeichnet wird und die Spurungssteuereinrichtung (38) eine Spurungssteuerung unter Verwendung des Pilotsignals durchführt.

3. Gerät nach Anspruch 2, wobei das Pilotsignal Signale einer ersten Frequenz und einer zweiten Frequenz aufweist, die alternierend auf jeden zwei Spuren aufgezeichnet sind.

4. Gerät nach Anspruch 2, wobei die Spurungssteuereinrichtung eine Spurungssteuerung unter Steuern einer Drehgeschwindigkeit einer Bandantriebsspule (16) auf der Basis eines Spurungsfehlersignals, das von dem Pilot-Signal erhalten ist, das auf den Spuren aufgezeichnet ist, durchführt.

5. Gerät nach Anspruch 1 oder 2, wobei eine Steuerperiode der Spurungssteuereinrichtung (38) kleiner als N Spuren ist.

## Revendications

1. Appareil d'enregistrement et de reproduction de signal numérique pour enregistrer et reproduire un signal vidéo (101) dont chaque unité de groupe est numérisée, compressée en quantité d'informations et divisée en N pistes, où N est un entier de 4 ou plus, d'un support d'enregistrement (11), comprenant :
une tête (13A, 13B) pour enregistrer un signal vidéo numérique compressé sur le support d'enregistrement (11) et pour reproduire le signal enregistré ;
un moyen de commande de suivi de piste (38) pour commander le suivi de piste de la tête sur une piste lors de la reproduction ;
un moyen de détection de position reproduite (36) pour détecter une position de piste reproduite dans une unité de groupe à partir du signal reproduit (120) par la tête, et pour produire un signal de position de piste reproduite (121) indiquant la position de piste reproduite qui a été détectée ;
un moyen de détection de phase relative (37) pour détecter une phase relative du signal de position de piste reproduite en un signal de référence ;
un moyen d'ajustage de temps de retard (32) pour retarder le signal reproduit sur la base de la phase relative détectée par le moyen de détection de phase relative pour obtenir un signal reproduit retardé ; et
un moyen de décompression (33) pour décompresser le signal reproduit retardé par le moyen d'ajustage de retard pour obtenir un signal vidéo reproduit (113, 114).

2. Appareil selon la revendication 1, dans lequel un signal pilote est enregistré sur la piste, et le moyen de commande de suivi de piste (38) réalise une commande de suivi de piste en utilisant le signal pilote.

3. Appareil selon la revendication 2, dans lequel le signal pilote comprend des signaux d'une première fréquence et d'une seconde fréquence enregistrés alternativement toutes les deux pistes.

4. Appareil d'enregistrement selon la revendication 2, dans lequel le moyen de commande de suivi de piste réalise une commande de suivi de piste en commandant une vitesse de rotation d'un cabestan (16) sur la base d'un signal d'erreur de suivi de piste obtenu à partir du signal pilote enregistré sur les pistes.

5. Appareil selon la revendication 1 ou 2, dans lequel une période de commande du moyen de commande de suivi de piste (38) est plus petite que N pistes.
